# EUROPEAN PATENT SPECIFICATION

(11) **EP 0 757 853 B1**
(45) Date of publication and mention of the grant of the patent: **17.06.1998**
(21) Application number: 94929292.4
(22) Date of filing: 22.09.1994
(51) Int. Cl.: H02G 15/18

(54) **A PRESTRETCHED, ELASTOMERIC ARTICLE**
VORGESTRECKTER ELASTOMERISCHER GEGENSTAND
ARTICLE EN ELASTOMERE PREETIRE

(30) Priority: 25.04.1994 US 232951
(43) Date of publication of application: 12.02.1997
(73) Proprietor: MINNESOTA MINING AND MANUFACTURING COMPANY, St. Paul, Minnesota 55133-3427 (US)
(72) Inventor: HOPCUS, Ernest, A., Saint Paul, MN 55133-3427 (US); KIRKPATRICK, Robert, M., Saint Paul, MN 55133-3427 (US); HELLBUSCH, Dieter, Saint Paul, MN 55133-3427 (US); KRABS, Raymond, Saint Paul, MN 55133-3427 (US); ROEHLING, Werner, Saint Paul, MN 55133-3427 (US)
(74) Representative: Hilleringmann, Jochen, Dipl.-Ing.
(86) International application number: US9410712
(87) International publication number: WO9529524

(56) References cited:
- EP-A- 0 504 035
- EP-A- 0 541 000
- EP-A- 0 619 636
- DE-A- 1 909 323
- DE-U- 1 719 023
- FR-A- 2 518 304
- GB-A- 2 265 501
- US-A- 3 515 798

## Description

The present invention relates to prestretched tubes (PST) supported in a stretched condition by a rigid core which may be removed to allow the tube to contract into contact with an object to be environmentally protected and/or electrically insulated.

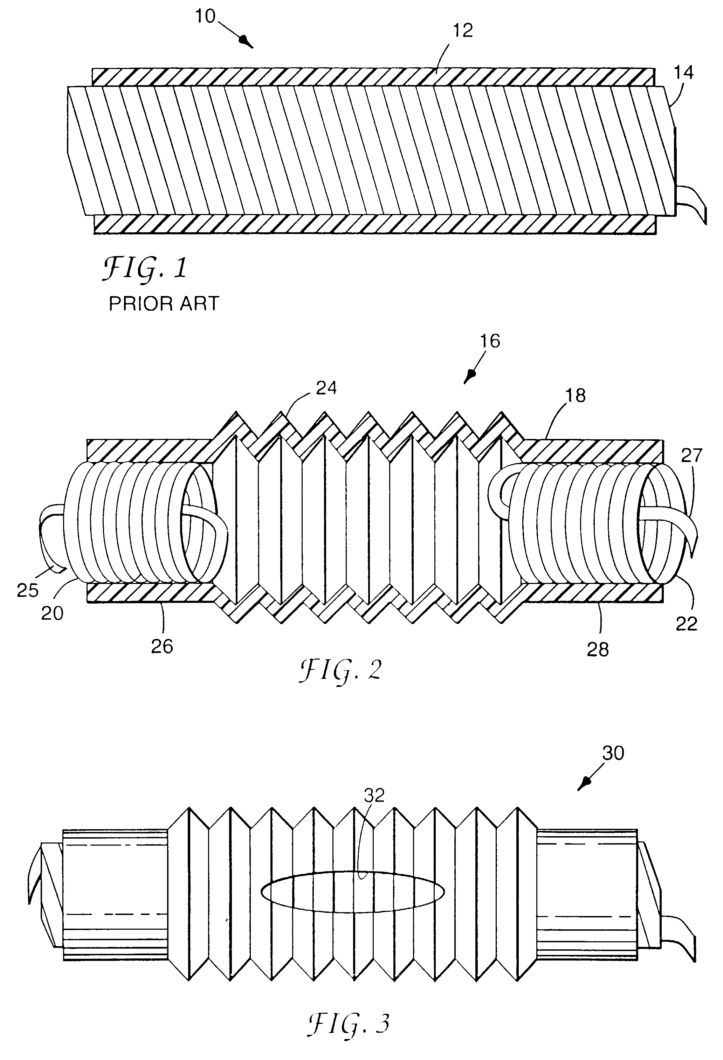

US-A-3,515,798 and EP-A-0 541 000 each disclose an assembly of a elastic tube and a rigid polymeric core which supports the tube in a radially-expanded condition. This conventional construction is illustrated in Figure 1. The assembly is typically used to electrically insulate and environmentally protect the connection between two electrical power cables. In use, the prestretched tube (PST) assembly is slid over the end of one cable and temporarily positioned along the length of the cable at a position removed from the cable end. Then the connection is made between the cables and the PST assembly repositioned over the connection. The core is then removed to allow the PST to contract into contact with the cables at each side of the connection to protect the connection area. The core is made removable by cutting or molding a helical spiral in its inner and/or outer surfaces to define a strip of material helically wound into a tube. By pulling one end of the strip, the core can be unwound at the spiral and the core progressively removed in a continuous length.

While the PST assembly just described works well for its intended purpose, there are some situations where it is not feasible to use the PST assembly as described. For example, it frequently happens that the connection between cable must be accomplished in a confined space such as a manhole. There may not be enough exposed length of either cable to allow the PST assembly to be slid along the length of one cable a distance sufficient to expose the cable end for connection. Also, it is sometimes necessary to form the joined cables into a bend in the area of the connection. In other situations, such as use of the PST to cover a connection to a bushing, one end of the PST assembly may be in close proximity to a vertical surface which inhibits removal of the core. In any of these situations, and many others, the rigidity of the PST assembly or the orientation of the core will not permit it to accommodate the requirements of the connection circumstances.

DE-U-17 19 023 shows an elastomeric article which is used to electrically insulate and environmentally protect the connection between two electrical power cables and comprises two convoluted sections.

It is the object of the present invention to provide a PST assembly which is adapted to accommodate the requirements of the connection to be covered.

This object is solved according to the invention by means of a prestretched elastomeric article as defined in claim 1. The subclaims relate to preferred embodiments thereof.

The present invention overcomes the limitations of the above-described PST assembly by providing a prestretched, elastomeric article including a molded tube having open ends and an unstretched, convoluted central section, the ends being elastically stretched in the radial direction and including at least a portion which is cylindrical to provide a sealing surface, and two cores independent of each other disposed one at each of the ends for supporting the tube ends in the stretched condition. Each of the cores is removable to permit the tube ends to elastically recover to a diameter smaller than the diameter of the tube ends when supported by the cores. In one embodiment, the cores are removable from the same end of the PST assembly.

The convoluted, "bellows" configuration of the central portion of the PST assembly, and the facts that the rigid cores are independent of each other and located only at the ends of the PST assembly, allow the assembly to accommodate a wide variety of unusual circumstances where conventional PST products could not be used. In the examples above of difficult situations, the convolutions of the assembly could be compressed in the situation where only a short length of cable is available to allow access to the cable end and permit a connection to another cable to be accomplished. The PST assembly would then be allowed to expand longitudinally to cover the connection. The increased flexibility of the convoluted section of the PST and the lack of a rigid core in this location, allow the PST assembly to be bent to any desired angle, thus accommodating the second situation posed above.

Where one end of the PST is in close proximity to a vertical surface, arrangement of the cores so that they may be withdrawn from one end of the PST allows the PST to be positioned closely to the surface and the core still removed.

The present invention will be more thoroughly described with reference to the accompanying drawings, wherein like numbers refer to like parts in the several views, and wherein:
Figure 1 is a longitudinal cross-sectional view of a conventional PST assembly;
Figure 2 is a longitudinal cross-sectional view of a first embodiment of a PST assembly according to the present invention;
Figure 3 is a plan view of a second embodiment of a PST assembly according to the present invention;
Figure 4 is a perspective view, partially in cross-section of a third embodiment of a PST assembly according to the present invention; and
Figure 5 is a cross-sectional view of the PST assembly of Figure 4 as assembled to components of an electrical circuit.

Figure 1 illustrates a conventional PST assembly, generally indicated as 10, which includes an outer tube 12 of elastomeric material which is stretched in the radial direction and an inner core 14 which supports the tube 12 in the stretched configuration. The core 14 is removable to allow the tube 12 to contract and seal to an object over which the PST assembly was placed. The assembly of Figure 1 has proven very useful in sealing a connection between power cables, although it has much more general application. When used with cables, the PST assembly 10 is slid over the end of one cable and positioned along the length of the cable. The connection is then made between the cables and the PST assembly 10 is repositioned to cover the connection. The core 14 is then removed to allow the tube 12 to contract to cover the connection and seal to each of the cables on either side of the connection.

The PST tubing 12 is a molded or extruded section of an elastomeric polymer, preferably EPM or EPDM, either of which may be modified in accordance with the teachings of US-A-4,363,842 and US-A-5,080,942.

The core 14 is preferably made of a versatile plastic such as polypropylene, polyethylene or polyvinyl chloride. The core 14 may be formed according to any of the methods described in US-A-3,515,798; US-A-4,503,105 or US-A-4,871,599. Those patents describe various ways of forming a cylindrical core 14 having a helical line of weakening which spirals from end to end. The core 14 can thus be thought of as a narrow strip which is helically wound to form a cylinder and wherein the adjacent edges of the strip are attached to each other. A free end of the strip is led back through the center of the core 14 and, if pulled upon, will cause the strip to separate at the line of weakening and unwind. It is necessary that the core 14 be unwound from the end opposite the end from which the strip is pulled so that the contracting core 14 does not contract down upon the strip and prevent its removal.

Figure 2 illustrates the preferred embodiment of the invention, which is a PST assembly 16 including a PST tube 18 and two cores 20 and 22. The tube 18 is molded of any of the materials discussed above into a shape which includes a convoluted central portion 24 and two cylindrical ends 26 and 28. The cores 20 and 22 are formed of the materials and in the manner discussed above with respect to Figure 1. Each core 20 and 22 has a free end 25 and 27 which extends from the end of the cores 20 and 22 adjacent the convoluted section 24, through the core 20 or 22 and out the outer end of the cores 20 and 22. Pulling these free ends 25 and 27 will thus cause the cores 20 and 22 to unwind from the inside of the tube 18 toward the outside.

The tube 18 is constructed as shown in Figure 2 to allow the PST assembly 16 to be used in situations where it would be difficult to use the conventional PST assembly 10 shown in Figure 1. The combination of the convolutions and the fact that the cores 20 and 22 do not extend into the convolution area 24 permit the PST assembly great versatility. For example, in tight situations the length of the PST assembly 16 can be compressed to allow a connection to be made and then elongated to cover the connection. The convolution area 24 is also easily bent to accommodate bends in the cable. Neither of these actions could be accomplished with the PST assembly of Figure 1.

Figure 3 illustrates a PST assembly 30 formed as is the PST assembly 16 of Figure 2 but with the addition of a hole 32 which may be used to introduce such things a waterproofing resin to the completed connection after the PST has been positioned over the connection. Since the hole 32 is located at a portion of the assembly 30 which is not stretched to fit over the cores, there is no danger that the hole 32 will cause the material of the PST assembly 30 to tear.

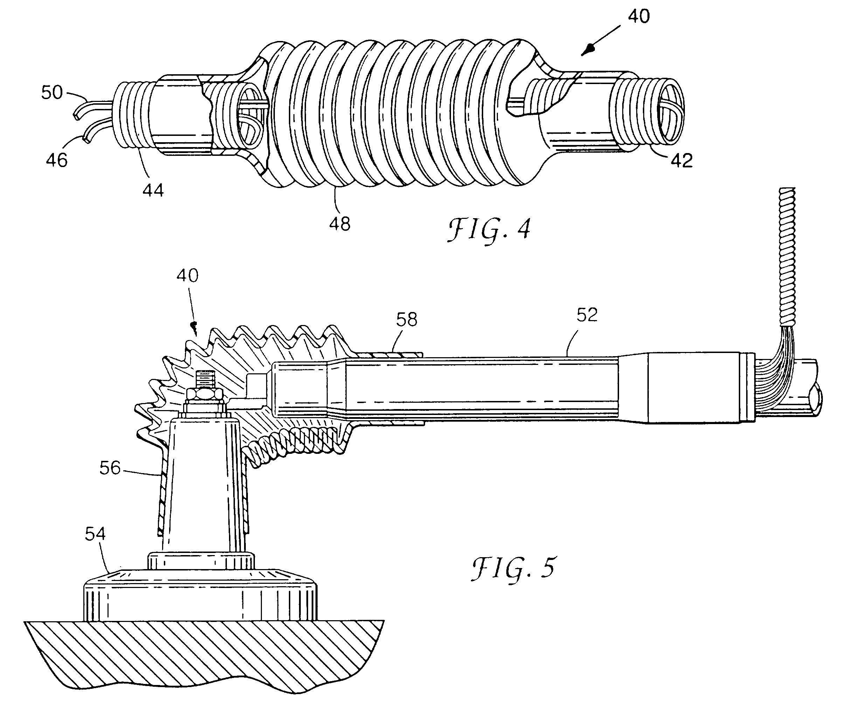

Figure 4 illustrates a PST assembly 40 formed as is the PST assembly 16 of Figure 2 but with one of the cores 42 reversed to permit the core 42 to be removed from the assembly 40 from the end opposite the end at which the core 42 is located. It will be seen from Figure 4 that one core 44 is oriented the same as those of the PST assembly 16 above, that is with the free end 46 of the core 44 extending from the end of the core 44 adjacent the convolutions 48 through the core 44 and out the end of the assembly at which the core 44 is located. However, it will be seen that the remaining core 42 is oriented such that the free end 50 of the core 42 extends from the end of the core 42 adjacent the end of the assembly 40 through the core 42 and the core 44 and out the same end as extends the free end 46 of the core 44. Thus both cores 42 and 44 may be removed from the PST assembly 40 by pulling the free ends 46 and 50 from the same end of the assembly 40. Of course, the far core 42 must be removed first so that the PST does not collapse onto the free end 50 and prevent removal of the far core 42.

Figure 5 illustrates the advantage of orienting the cores 42 and 44 as described with respect to Figure 4. In this situation, the PST assembly 40 is being used to cover the connection between a termination 52 and a bushing 54. Since one end 56 of the assembly 40 is close to the vertical surfaces of the bushing 54, removal of the core from that end would be at least difficult. The construction described above with respect to Figure 4 allows the end 56 of the assembly to be positioned over the bushing 54 as illustrated and the core at the end 56 removed through the opposite end 58 of the PST assembly 40. The remaining core located at the termination end of the PST assembly 40 is subsequently removed to produce an installation as shown in figure 5. It should be noted that Figure 5 also illustrates the advantage of the bellows configuration which allows the PST 40 to be installed with one end at an angle to the other.

The present invention has been described with respect to only a limited number of embodiments, but many variations are possible. For example, the two ends of the PST tube can be molded to different diameters and/or stretched to different diameters by different sized cores. The material could be thicker at one portion of the tube than at another, or the ends could be molded to include ridges or grooves for sealing or to engage with other molded shapes on the object to be covered by the PST. In addition, the cores could be different that those shown. The cores could be solid tubes which could simply be slid from the expanded ends of the PST assembly, at least in the cases of the embodiments of Figure 2 and 3. In the embodiment of Figure 4, at least one of the cores must be as described above to allow its removal from the opposite end of the assembly. The cores could be ones of the type which allow removal without helical unwinding, as have been developed recently.

## Claims

1. A prestretched, elastomeric article comprising:
- a molded tube (18) having open ends (26,28) and an unstretched, convoluted central section (24;48), said ends (26,28) being elastically stretched in the radial direction and including at least a portion which is cylindrical to provide a sealing surface, and
- two cores (20,22;42,44) independent of each other disposed one at each of said ends (26,28) for supporting said tube ends (26,28) in said stretched condition,
- said cores (20,22;42,44) being removable to permit said tube ends (26,28) to elastically recover to a diameter smaller than the diameter of said tube ends (26,28) when supported by said cores (20,22;42,44).

2. A prestretched, elastomeric article according to claim 1, wherein said tube ends (26,28) have equal diameters when molded.

3. A prestretched, elastomeric article according to claim 2, wherein said cores (20,22;42,44) have equal diameters.

4. A prestretched, elastomeric article according to any one of claims 1 to 3, wherein said article as molded has a uniform material thickness.

5. A prestretched, elastomeric article according to any one of claims 1 to 4, wherein said cores (20,22;42,44) are polymeric tubes having a cut defining a continuous helically-wound strip, whereby said cores (20,22;42,44) may be removed by pulling an end (25,27;46,50) of said strip to unwind said strip.

6. A prestretched, elastomeric article according to any one of claims 1 to 5 further including a hole (32) in said unstretched, convoluted central section (48).

7. A prestretched, elastomeric article according to any one of claims 1 to 6, wherein one of said cores (42;44) is oriented so as to permit removal of both cores (42,44) from the same end of said elastomeric article.

8. A prestretched, elastomeric article according to claim 7, wherein said cores (42,44) are polymeric tubes having a cut defining a continuous helically-wound strip, whereby each of said cores (42,44) may be removed by pulling an end of said strip to unwind said strip, and wherein said ends (46,50) emerge from the same end of said elastomeric article prior to removal of said cores (42,44).

## Patentansprüche

1. Vorgestreckter elastomerer Artikel mit:
- einem geformten Schlauch (18) mit offenen Enden (26, 28) und einem nicht gestreckten, gefalteten Mittelbereich (24; 48), wobei die Enden (26, 28) in Radialrichtung elastisch gestreckt sind und wenigstens einen Bereich aufweisen, der zur Bildung einer Dichtfläche zylindrisch ist, und
- zwei voneinander unabhängigen Kernen (20, 22; 42, 44), die jeweils an einem der Enden (26, 28) zum Stützen der Schlauchenden (26, 28) im gestreckten Zustand angeordnet sind,
- wobei die Kerne (20, 22; 42, 44) entfernbar sind, um ein elastisches Rückstellen der Schlauchenden auf einen Durchmesser zu ermöglichen, der kleiner als der Durchmesser der Schlauchenden (26, 28) ist, wenn diese von den Kernen (20, 22; 42, 44) gestützt sind.

2. Vorgestreckter elastomerer Artikel nach Anspruch 1, bei dem die Schlauchenden (26, 28) nach dem Formen den selben Durchmesser haben.

3. Vorgestreckter elastomerer Artikel nach Anspruch 2, bei dem die Kerne (20, 22; 42, 44) den selben Durchmesser haben.

4. Vorgestreckter elastomerer Artikel nach einem der Ansprüche 1 bis 3, bei dem der geformte Artikel eine gleichmäßige Materialstärke hat.

5. Vorgestreckter elastomerer Artikel nach einem der Ansprüche 1 bis 4, bei dem die Kerne (20, 22; 42, 44) Polymer-Schläuche mit einem Einschnitt sind, durch den ein durchgehender schraubenlinienförmig gewundener Streifen gebildet ist, wodurch die Kerne (20, 22; 42, 44) entfernt werden können, indem der Streifen durch Ziehen an einem Ende (25, 27; 42, 44) abgewickelt wird.

6. Vorgestreckter elastomerer Artikel nach einem der Ansprüche 1 bis 5, ferner mit einem Loch (32) in dem nicht gestreckten, gefalteten Mittelbereich (48).

7. Vorgestreckter elastomerer Artikel nach einem der Ansprüche 1 bis 6, bei dem einer der Kerne (42; 44) derart ausgerichtet ist, daß er das Entfernen beider Kerne (42; 44) aus dem selben Ende des elastomeren Artikels ermöglicht.

8. Vorgestreckter elastomerer Artikel nach Anspruch 7, bei dem die Kerne (42, 44) Polymer-Schläuche mit einem Einschnitt sind, durch den ein durchgehender schraubenlinienförmig gewundener Streifen gebildet ist, wodurch jeder der Kerne (42, 44) durch Ziehen an einem Ende des Streifens abgewickelt und entfernt werden kann, und bei dem die Enden (46, 50) vor dem Entfernen der Kerne (42, 44) aus dem selben Ende des elastomeren Artikels ragen.

## Revendications

1. Article en élastomère préétiré comprenant :
- un tube moulé (18) comportant des extrémités ouvertes (26,28) et une section centrale en spires, non préétirée (24;48), lesdites extrémités (26,28) étant étirées de manière élastique dans la direction radiale et incluant au moins une portion qui est cylindrique pour fournir une surface d'étanchéité, et
- deux noyaux (20,22;42,44) indépendants l'un de l'autre disposés un à chacune desdites extrémités (26,28) pour supporter lesdites extrémités du tube (26,28) dans ladite situation d'étirement,
- lesdits noyaux (20,22;42,44) étant amovibles pour permettre auxdites extrémités (26,28) du tube de recouvrer élastiquement un diamètre inférieur au diamètre desdites extrémités (26,28) du tube là où elles s'appuient sur lesdits noyaux (20,22;42,44).

2. Article en élastomère préétiré selon la revendication 1, dans lequel lesdites extrémités (26,28) du tube ont des diamètres égaux après moulage.

3. Article en élastomère préétiré selon la revendication 2, dans lequel lesdits noyaux (20,22;42,44) ont des diamètres égaux.

4. Article en élastomère préétiré selon l'une quelconque des revendications 1 à 3, dans lequel ledit article a une épaisseur uniforme de matière après moulage.

5. Article en élastomère préétiré selon l'une quelconque des revendications 1 à 4, dans lequel lesdits noyaux (20,22;42,44) sont des tubes polymériques ayant une coupe définissant une bande enroulée de manière continue en hélice, ce par quoi on peut retirer lesdits noyaux (20,22;42,44) en tirant une extrémité (25,27;46,50) de ladite bande pour dérouler ladite bande.

6. Article en élastomère préétiré selon l'une quelconque des revendications 1 à 5, incluant en outre un trou (32) dans ladite section centrale en spires, non préétirée (48).

7. Article en élastomère préétiré selon l'une quelconque des revendications 1 à 6, dans lequel un desdits noyaux (42;44) est orienté de manière à permettre l'enlèvement des deux noyaux (42,44) à partir de la même extrémité dudit article en élastomère.

8. Article en élastomère préétiré selon la revendication 7, dans lequel lesdits noyaux (42,44) sont des tubes polymériques ayant une coupe définissant une bande enroulée de manière continue en hélice, ce par quoi on peut retirer chacun desdits noyaux (42,44) en tirant une extrémité de ladite bande pour dérouler ladite bande, et dans lequel lesdites extrémités (46,50) sortent du même côté dudit article en élastomère avant l'enlèvement desdits noyaux (42,44).
